# EUROPÄISCHE PATENTANMELDUNG

(11) **EP 3 696 116 A1**
(43) Veröffentlichungstag der Anmeldung: **19.08.2020**
(21) Anmeldenummer: 20155106.6
(22) Anmeldetag: 03.02.2020
(51) Int. Cl.: B65G 1/04, B65G 43/00

(54) **HOCHREGALLAGER SOWIE VERFAHREN ZUM BETREIBEN EINES HOCHREGALLAGERS**

(30) Priorität: 05.02.2019 DE 102019102804
(71) Anmelder: Klug, Dieter Jakob, 93492 Treffelstein (DE)
(72) Erfinder: Klug, Dieter Jakob, 93492 Treffelstein (DE); Bennewitz, Henrik B., 42655 Solingen (DE)
(74) Vertreter: Baudler, Ron

(57) **Zusammenfassung**

Die Erfindung betrifft ein Hochregallager (1) zum Lagern von Stückgut (4) mit mehreren übereinander angeordneten Lagerebenen (2) und einer Vielzahl von Lagerplätzen (3) für das Stückgut (4). Das Hochregallager (1) weist mehrere übereinander angeordnete Wartungsgänge (5) für ein Wartungspersonal (6) auf, über die die Lagerebenen (2) zugänglich sind. Die Wartungsgänge (5) weisen Führungen (8) auf, entlang derer Regalfahrzeuge (9) bewegbar sind, mit deren Hilfe das Stückgut (4) den einzelnen Lagerplätzen (3) zustellbar ist, wobei das Hochregallager (1) wenigstens einen mehrere Lagerebenen (2) in Vertikalrichtung (V) verbindenden Heber (10) umfasst. Der Heber (10) ist entlang eines Hubweges (11) bewegbar, der die einzelnen Wartungsgänge (5) in Vertikalrichtung (V) miteinander verbindet. Zur Verbesserung der Sicherheit für das Wartungspersonal (6) wird vorgeschlagen, dass jedem Wartungsgang (5) eine Absturzsicherung (12) zugeordnet ist, die zwischen einer Normalstellung (13) und einer Fluchtstellung (14) bewegbar ist, wobei die Absturzsicherung (12) in der Normalstellung (13) den Weg zwischen dem Wartungsgang (5) und dem Hubweg (11) versperrt. Ebenso ist vorgesehen, dass die Absturzsicherung (12) in der Fluchtstellung (14) den Weg zwischen dem Wartungsgang (5) und dem Hubweg (11) freigibt und sich darüber hinaus in den Hubweg (11) erstreckt. Außerdem betrifft die Erfindung ein Verfahren zum Betreiben eines Hochregallagers (1).

## Beschreibung

Die vorliegende Erfindung betrifft ein Hochregallager zum Lagern von Stückgut, wobei das Hochregallager mehrere übereinander angeordnete Lagerebenen mit jeweils einer Vielzahl von Lagerplätzen für das Stückgut umfasst, wobei das Hochregallager mehrere übereinander angeordnete Wartungsgänge für ein Wartungspersonal aufweist, über die die Lagerebenen zugänglich sind, wobei die Wartungsgänge Führungen aufweisen, entlang derer Regalfahrzeuge bewegbar sind, mit deren Hilfe das Stückgut den einzelnen Lagerplätzen zustellbar ist, wobei das Hochregallager wenigstens einen mehrere Lagerebenen in Vertikalrichtung verbindenden Heber umfasst, mit dessen Hilfe die Regalfahrzeuge und/oder das Stückgut zwischen einzelnen Lagerebenen bewegbar sind, und wobei der Heber entlang eines Hubweges bewegbar ist, der die einzelnen Wartungsgänge in Vertikalrichtung miteinander verbindet.

Weiterhin betrifft die Erfindung ein Verfahren zum Betreiben eines Hochregallagers mit wenigstens einem Wartungsgang und wenigstens einem Heber, wobei der Heber entlang eines Hubweges in Vertikalrichtung bewegbar ist, wobei während eines Normalbetriebs ein Weg zwischen dem Wartungsgang und dem Hubweg für ein Wartungspersonal durch eine Absturzsicherung in einer Normalstellung versperrt wird.

Hochregallager und insbesondere automatisierte Hochregallager sind bekannt und werden beispielsweise zur dynamischen Lagerung von Stückgut und insbesondere bei angestrebter hoher Lagerumschlagshäufigkeit eingesetzt. Ein Hochregallager weist in der Regel eine Vielzahl von horizontal verlaufenden Lagerebenen mit jeweils einer Vielzahl von Lagerplätzen auf. Das ein- bzw. auszulagernde Stückgut wird insbesondere von autonomen Regalfahrzeugen von und zu den entsprechenden Lagerplätzen transportiert. Die Regalfahrzeuge, auch "Shuttles" oder "Regal-Shuttles" genannt, bewegen sich auf den Lagerebenen entlang von Führungen, die in der Regel nur eine geradlinige Bewegung zulassen. Die Führungen sind insbesondere in einer die Lagerebenen verbindenden Gasse übereinander angeordnet. Um die Regalfahrzeuge und/oder das Stückgut von einer Lagerebene auf eine andere Lagerebene zu transportieren weisen Hochregallager Heber auf, die sich in Vertikalrichtung entlang eines Hubweges senkrecht zu den Lagerebenen bewegen. Mitunter befindet sich der Hubweg innerhalb eines für den Heber vorgesehenen Schachts.

Im laufenden Betrieb des Hochregallagers ist ein Zugang beispielsweise durch Wartungspersonal zu den Lagerebenen aus Sicherheitsgründen normalerweise ausgeschlossen. Insbesondere bei einem Ausfall einzelner Regalfahrzeuge muss ein Zugang des Wartungspersonals zu den Lagerebenen aber gegeben sein. Hierzu sind in der Regel in der zuvor beschriebenen Gasse mehrere übereinander angeordnete Wartungsgänge vorgesehen, entlang denen sich das Wartungspersonal im Wartungsfall bewegen kann. Die Wartungsgänge können an einem ihrer Enden an den Hubweg grenzen. Der Zugang für das Wartungspersonal befindet sich entsprechend meist auf der gegenüberliegenden Seite und der Durchgang zwischen Wartungsgang und Hubweg ist für das Wartungspersonal aus Sicherheitsgründen versperrt. Falls während des Aufenthalts des Wartungspersonals im Hochregallager ein Notfall wie beispielsweise ein Brand eintritt, kann das Wartungspersonal nur über den Zugang, also nur in einer Richtung flüchten. Dies kann einen sehr langen und damit für das Wartungspersonal potenziell lebensgefährlichen Fluchtweg darstellen.

Aus der DE 10 2015 015 775 A1 ist eine Regallagervorrichtung mit Fluchtwegen für den Gefahrenfall bekannt. Neben Fluchtöffnungen, die übereinander und/oder nebeneinander angeordnete Wartungsgänge zum Zwecke der Flucht miteinander verbinden, werden in dieser Schrift ebenfalls Fluchttüren an den Stirnenden der Wartungsgänge vorgeschlagen. Nachteilig ist hierbei jedoch, dass bei einer Flucht im Bereich des Hubweges eine erhebliche Absturzgefahr für das Wartungspersonal besteht.

Aufgabe der vorliegenden Erfindung ist es somit, die Sicherheit für das Wartungspersonal in einem Hochregallager zu verbessern.

Die Aufgabe wird gelöst durch ein Hochregallager und ein Verfahren mit den Merkmalen der unabhängigen Patentansprüche.

Das erfindungsgemäße Hochregallager eignet sich zum Lagern von Stückgut und umfasst mehrere übereinander angeordnete Lagerebenen mit jeweils einer Vielzahl von Lagerplätzen für das Stückgut. Das Hochregallager weist weiterhin mehrere übereinander angeordnete Wartungsgänge für ein Wartungspersonal auf, über die die Lagerebenen zugänglich sind. Die Wartungsgänge weisen wiederum Führungen (z.B. Schienen) auf, entlang derer Regalfahrzeuge, die vorzugsweise Rollen aufweisen, bewegbar sind, mit deren Hilfe das Stückgut den einzelnen Lagerplätzen zustellbar ist. Außerdem umfasst das Hochregallager wenigstens einen mehrere Lagerebenen in Vertikalrichtung verbindenden Heber, mit dessen Hilfe die Regalfahrzeuge und/oder das Stückgut zwischen einzelnen Lagerebenen bewegbar sind, wobei der Heber entlang eines Hubweges bewegbar ist, der die einzelnen Wartungsgänge in Vertikalrichtung miteinander verbindet.

Erfindungsgemäß wird vorgeschlagen, dass jedem Wartungsgang zumindest eine Absturzsicherung zugeordnet ist, die zwischen einer Normalstellung und einer Fluchtstellung bewegbar ist, wobei die Absturzsicherung in der Normalstellung den Weg zwischen dem entsprechenden Wartungsgang und dem Hubweg für das Wartungspersonal versperrt. Ebenso ist vorgesehen, dass die Absturzsicherung in der Fluchtstellung den Weg zwischen dem genannten Wartungsgang und dem Hubweg für das Wartungspersonal freigibt und sich darüber hinaus in den Hubweg erstreckt und dadurch einen Fallschutz für das Wartungspersonal bildet.

Das Hochregallager kann beispielsweise ebenfalls mit einheitlichen Lagerbehältern betrieben werden, in denen das Stückgut transportiert und/oder gelagert wird.

Die Fluchtstellung der Absturzsicherung dient insbesondere einer Flucht des Wartungspersonals, also einer schnellstmöglichen Evakuierung des Hochregallagers beispielsweise in einem Notfall. Der Notfall kann in einem äußeren Störfall, wie beispielsweise in einem Brand, Erdbeben, Unwetter, Stromausfall oder in einer Überschwemmung liegen. Daneben ist beispielsweise ein medizinischer Notfall beim Wartungspersonal denkbar. Trotz der Bezeichnung Fluchtstellung kann die Absturzsicherung in der Fluchtstellung auch einem Zugang zum Wartungsgang dienen. Im Notfall kann auf diese Weise ein Zugang beispielsweise für Rettungsdienst und Feuerwehr geschaffen werden.

Die im Folgenden beschriebenen Merkmale des Hochregallagers werden zur besseren Verständlichkeit meist in der Einzahl beschrieben. Dies ist als beispielhafter Ausschnitt zu verstehen. Ein Hochregallager kann auch mehrere Exemplare eines Merkmals (bspw. Wartungsgang, Heber, Absturzsicherung, usw.) aufweisen, wobei die beschriebenen Eigenschaften und Beziehungen jeweils für jedes Exemplar oder bei dualen Beziehungen für jedes Paar von Exemplaren gelten.

Im Falle einer regulären Wartung des erfindungsgemäßen Hochregallagers wird das Wartungspersonal im Bereich des Hubwegs durch die Absturzsicherung in der Normalstellung gegen einen Absturz geschützt. Durch die Möglichkeit, die Absturzsicherung in die Fluchtstellung zu bringen, steht aber im Notfall ein kurzer Fluchtweg zur Verfügung, wobei durch die Erstreckung der Absturzsicherung in den Hubweg auch in der Fluchtstellung ein Schutz gegen einen Absturz gegeben ist.

Ein Stellungswechsel zwischen Normalstellung und Fluchtstellung der Absturzsicherung kann durch das Wartungspersonal ausgelöst werden. Es ist aber ebenfalls denkbar, dass die Fluchtstellung im Notfall automatisch eingenommen wird. Ein entsprechender Auslösemechanismus der Absturzsicherung ist hierzu beispielsweise mit einer Brandmeldeanlage oder einer zentralen Notabschaltung des Hochregallagers verbunden. Der Auslösemechanismus ist weiterhin vorzugsweise an ein Notstromversorgungssystem gekoppelt.

Wie bereits erwähnt, kann der Heber auch in einem Heberschacht angeordnet sein, worin sich folglich ebenfalls der Hubweg befände. In der Fluchtstellung versperrt die Absturzsicherung in diesem Fall den Heberschacht teilweise oder vollständig.

Um eine Beeinträchtigung der Absturzsicherung durch den Heber zu vermeiden, kann der Heber im Notfall und insbesondere vor Einnahme der Fluchtstellung durch die Absturzsicherung in eine Grundposition, beispielsweise unmittelbar über einem Bodenniveau, gebracht werden. Die Einnahme der Grundposition kann hierbei beispielsweise durch das Auslösen eines Alarms oder den Auslösemechanismus der Absturzsicherung verursacht werden. Eine Steuerung des Hebers ist hierzu insbesondere mit dem Auslösemechanismus der Absturzsicherung, der Brandmeldeanlage oder der zentralen Notabschaltung des Hochregallagers verbunden. Das Fahren in Grundposition des Hebers kann bei Stromausfall durch Schwerkraft oder mittels eines Notstromversorgungssystems erfolgen.

Die Absturzsicherung kann einteilig oder mehrteilig ausgebildet sein, wobei bei einer mehrteiligen Ausbildung beispielsweise ein Bauteil den Weg zwischen Wartungsgang und Hubweg versperrt bzw. freigibt und sich ein anderes Bauteil in der Fluchtstellung der Absturzsicherung in den Hubweg erstreckt. Normalstellung und Fluchtstellung beziehen sich in diesem Fall insbesondere auf verschiedene Positionen aller beweglichen Bestandteile der Absturzsicherung.

Im Bereich der Absturzsicherung kann ein auf einen potenziellen Fluchtweg hinweisendes Schild angeordnet sein, wobei das Schild insbesondere beleuchtet ist. Auch eine Anweisung für das Wartungspersonal, die beschreibt wie die Absturzsicherung in die Fluchtstellung gebracht werden kann, kann im Bereich der Absturzsicherung angebracht werden.

In einer vorteilhaften Weiterbildung des Hochregallagers weist die Absturzsicherung einen Klappmechanismus auf. Der Klappmechanismus stellt eine einfache und robuste Möglichkeit dar, eine Beweglichkeit der Absturzsicherung von der Normalstellung in die Fluchtstellung zu gewährleisten. Dabei kann die Absturzsicherung beispielsweise als Tür ausgebildet sein, wobei der Klappmechanismus in diesem Fall beispielsweise als Scharnier ausgebildet ist. Ein Bewegungsfreiheitsgrad des Klappmechanismus kann in horizontaler und/oder vertikaler Richtung bestehen.

Insbesondere kann die Absturzsicherung oder ein Teil derselben durch den Klappmechanismus auf mechanisch einfache Weise von einer aufrechten in eine liegende Position gebracht werden, wobei die aufrechte Position vorzugsweise die Normalstellung ist und die liegende Position die Fluchtstellung. In der liegenden Position kann die Absturzsicherung als Trittfläche im Hubweg dienen.

Es ist von Vorteil, wenn die Absturzsicherung eine Verriegelungsvorrichtung aufweist. Die Verriegelungsvorrichtung gewährleistet einerseits die Schutzwirkung der Absturzsicherung in der Normalstellung, indem ein ungewollter Stellungswechsel verhindert wird. Andererseits verhindert die Verriegelungsvorrichtung einen Missbrauch der Fluchtstellung der Absturzsicherung, indem ein ungewollter Zugang zum Wartungsgang verhindert wird. Vorzugsweise kann die Verriegelungsvorrichtung vom Wartungspersonal gelöst werden. Es ist denkbar, dass die Verriegelungsvorrichtung nur im Notfall und/oder nur vom Wartungsgang aus gelöst werden kann. Die Verriegelungsvorrichtung kann als einfacher mechanischer Riegel ausgebildet sein, es ist aber ebenfalls denkbar, dass eine elektrisch betriebene Verriegelungsvorrichtung, beispielsweise mit einem Elektromagneten, vorgesehen ist.

Weiterhin stellt es einen Vorteil dar, wenn die Absturzsicherung Querstreben aufweist, wobei ein vertikaler Abstand zwischen den Querstreben wenigstens einer Höhe der Regalfahrzeuge entspricht. Die Querstreben dienen in der Normalstellung der Absturzsicherung dem Versperren des Wegs zwischen dem Wartungsgang und dem Hubweg. In der Fluchtstellung können die Querstreben als Fallschutz im Hubweg und eventuell als Trittfläche für das Wartungspersonal dienen. Der Abstand zwischen den Querstreben ist vorzugsweise so gewählt, dass Regalfahrzeuge die Absturzsicherung in der Normalstellung passieren können. Auf diese Weise wird der Betrieb des Hochregallagers durch die Absturzsicherung nicht beeinträchtigt. Die Regalfahrzeuge, die durch den Heber entlang des Hubwegs über verschiedene Lagerebenen transportiert werden, können zwischen den Querstreben in den Wartungsgang gelangen. Vorzugsweise entspricht der Abstand zwischen den Querstreben einer Summe der Höhe der Regalfahrzeuge und einer Höhe eines transportierten Stückguts oder der Summe aus der Höhe der Regalfahrzeuge und der Höhe des bereits beschriebenen einheitlichen Lagerbehälters. Vorzugsweise sind die Querstreben durch einen Rahmen eingefasst, so dass die Streben beispielsweise Teil einer Art Tür oder eines Gatters sein können.

Es ist vorteilhaft, wenn im Wartungsgang, insbesondere im Bereich des Hubweges, ein Betätigungsmechanismus angeordnet ist, der ausgebildet ist, die Verriegelungsvorrichtung zu betätigen und/oder eine Bewegung der Absturzsicherung von der Normalstellung in die Fluchtstellung einzuleiten.

Durch den Betätigungsmechanismus kann die Absturzsicherung im Notfall schnell in die Fluchtstellung gebracht werden und damit das Wartungspersonal in kurzer Zeit evakuiert werden.

Der Betätigungsmechanismus kann beispielsweise als Hebel, Kurbel oder Schalter ausgebildet sein und kann ein Bestandteil der zuvor beschriebenen Verriegelungsvorrichtung sein. Der Betätigungsmechanismus kann mechanisch und/oder elektromagnetisch ausgelöst werden und/oder auf die Absturzsicherung und/oder die Verriegelungsvorrichtung wirken. Es ist denkbar, dass der Betätigungsmechanismus mit einem Alarm und/oder einer Gegensprechanlage verbunden ist. Ebenfalls ist es denkbar, dass durch den Betätigungsmechanismus der Heber im Hubweg stillgesetzt wird oder in eine neutrale Position bewegt wird, falls der Heber die Fluchtstellung blockiert. Der Betätigungsmechanismus kann insbesondere farblich markiert und/oder beleuchtet sein. Auch kann der Betätigungsmechanismus durch eine Schutzklappe gegen eine versehentliche Betätigung geschützt sein.

Die Absturzsicherung kann sich in der Normalstellung in einem metastabilen Zustand befinden, wobei dieser Zustand durch den Betätigungsmechanismus derart gestört wird, dass eine selbstständige Einnahme der Fluchtstellung verursacht wird.

Die Absturzsicherung kann einen Motor, beispielsweise einen Elektromotor, aufweisen, der die Bewegung der Absturzsicherung von der Normalstellung in die Fluchtstellung zumindest unterstützt. Ebenfalls kann ein Gegengewicht vorgesehen sein, das eine für die Bewegung der Absturzsicherung benötigte Kraft reduziert. Der Betätigungsmechanismus kann den Elektromotor aktivieren und/oder das Gegengewicht freigeben.

Für die sichere Flucht des Wartungspersonals im Gefahrenfall ist es besonders vorteilhaft, wenn am Hubweg eine Leiter angeordnet ist. Die Leiter dient dem Wartungspersonal der Überwindung eines Höhenunterschieds zwischen dem Wartungsgang und einem Bodenniveau. Die Absturzsicherung kann in der Fluchtstellung insbesondere den Weg zwischen dem Wartungsgang und der Leiter überbrücken. Die Leiter kann einen Rücken- bzw. Fallschutz aufweisen. Die Leiter kann auf Höhe jedes Wartungsgangs einen Einstieg aufweisen. Zur Verhinderung eines Missbrauchs kann die Leiter außerhalb des Notfalls nach oben eingeschoben sein, wobei die Leiter vorzugsweise einen Auslösemechanismus aufweist, der ein Ausfahren der Leiter verursacht. Der Auslösemechanismus kann beispielsweise manuell durch das Wartungspersonal oder im Notfall automatisch ausgelöst werden. Es ist ebenfalls denkbar, dass der Auslösemechanismus bei Einnahme der Fluchtstellung einer der Absturzsicherungen ausgelöst wird. Alternativ zur Leiter kann am Hubweg ebenfalls eine Treppe, Rutsche oder Stange angeordnet sein.

Vorteilhafterweise umfasst die Absturzsicherung eine Fluchttür und eine bewegliche Trittfläche, wobei sich die bewegliche Trittfläche in der Fluchtstellung in den Hubweg erstreckt. Die Fluchttür und die bewegliche Trittfläche können größtenteils unabhängig voneinander und damit mit größerer Flexibilität gestaltet werden. Vorzugsweise versperrt die Fluchttür in der Normalstellung den Weg zwischen dem Wartungsgang und dem Hubweg und gibt diesen Weg entsprechend in der Fluchtstellung frei. Die Fluchttür und die bewegliche Trittfläche sind insbesondere mechanisch und/oder elektrisch gekoppelt. Die bewegliche Trittfläche kann sich in der Normalstellung beispielsweise unterhalb des Wartungsgangs befinden und kann in der Fluchtstellung den Hubweg vorzugsweise vollständig versperren. Hierzu ist es von Vorteil, wenn die Trittfläche derart gelagert ist, dass sie ausgehend von einer Wartestellung in die Fluchtstellung verschwenkt oder verschoben werden kann. Vorzugsweise umfasst die Fluchttür die oben beschriebenen Streben.

Das erfindungsgemäße Verfahren dient dem Betreiben eines Hochregallagers mit wenigstens einem Wartungsgang und wenigstens einem Heber, wobei der Heber entlang eines Hubweges in Vertikalrichtung bewegbar ist. Während eines Normalbetriebs wird ein Weg zwischen dem Wartungsgang und dem Hubweg für ein Wartungspersonal durch eine Absturzsicherung, die sich hierbei in einer Normalstellung befindet, versperrt. Erfindungsgemäß ist vorgesehen, dass die Absturzsicherung in einem Notfall von der Normalstellung in eine Fluchtstellung gebracht wird. Hierbei wird der Weg zwischen dem Wartungsgang und dem Hubweg für das Wartungspersonal freigegeben und der Hubweg von der Absturzsicherung zumindest teilweise versperrt, so dass ein Fallschutz für das Wartungspersonal gebildet wird.

Das Verfahren ermöglicht den Betrieb eines Hochregallagers mit einem hohen Maß an Sicherheit für das Wartungspersonal. Die Gefahr eines Absturzes des Wartungspersonals in den Hubweg wird durch die Absturzsicherung in der Normalstellung während des Normalbetriebs minimiert. Im Notfall wird die Absturzsicherung in die Fluchtstellung gebracht, womit sich ein zusätzlicher, kurzer Fluchtweg für das Wartungspersonal eröffnet. Gleichzeitig wird durch das zumindest teilweise Versperren des Hubwegs durch die Absturzsicherung auch im Notfall ein Fallschutz für das Wartungspersonal gebildet. Die Absturzsicherung kann beispielsweise vom Wartungspersonal in die Fluchtstellung gebracht werden.

Für das Verfahren ist es vorteilhaft, wenn die Absturzsicherung im Notfall automatisch in die Fluchtstellung gebracht wird. Hierdurch kann im Notfall Zeit gespart werden und eine Freigabe des Fluchtwegs hängt nicht von dem im Notfall möglicherweise physisch und/oder psychisch beeinträchtigten Wartungspersonal ab. Auslöser für das automatische Einnehmen der Fluchtstellung kann beispielsweise ein Sensorsignal, insbesondere von einem Feuermelder oder Rauchmelder, sein. Auch ein manuelles Auslösen eines Feueralarms oder eines Notausschalters kommt als Auslöser in Betracht.

In diesem Zusammenhang ist es zusätzlich von Vorteil, wenn beim Einnehmen der Fluchtstellung der Absturzsicherung ein Alarm ausgelöst wird. Einerseits kann der Alarm weiteres Wartungspersonal auf einen Notfall hinweisen und entweder zur Flucht veranlassen oder Hilfe für in Not befindliches Wartungspersonal herbeirufen. Andererseits ist es ebenfalls denkbar, dass durch den Alarm automatisch Rettungskräfte und insbesondere die Feuerwehr verständigt werden.

Der Alarm kann ebenfalls sicherstellen, dass die Fluchtstellung der Absturzsicherung nur für echte Notfälle benutzt wird und nicht beispielsweise aus Bequemlichkeit ober um einen unbefugten Zugang zum Wartungsgang herzustellen.

Besonders vorteilhaft ist es, wenn der Heber durch das Einnehmen der Fluchtstellung der Absturzsicherung stillgesetzt wird. Bei einem Weiterbetrieb des Hebers besteht eine ernste Gefahr der Beschädigung des Hebers und/oder der Absturzsicherung und eine Verletzungsgefahr für das Wartungspersonal. Es ist ebenfalls denkbar, dass zusätzlich zum Heber auch weitere Elemente des Hochregallagers oder das Hochregallager insgesamt stillgesetzt werden.

In einer weiteren vorteilhaften Ausgestaltung des Verfahrens wird auch in einem Wartungsfall die Absturzsicherung in die Fluchtstellung gebracht, um dem Wartungspersonal Zugang zu dem Wartungsgang zu verschaffen. Eine Wartung des Hochregallagers kann somit vereinfacht bzw. zeitsparend durchgeführt werden. Auch steht hierdurch im Notfall ohne zusätzlich notwendige Maßnahmen ein vorteilhafter Fluchtweg zur Verfügung. Der entsprechende Heber muss in diesem Fall allerdings für die Dauer der Wartung stillgesetzt werden.

Insbesondere ist es vorteilhaft, wenn im Wartungs- und/oder im Notfall alle Regalfahrzeuge im Wartungsgang stillgesetzt werden. Durch die Bewegung der Regalfahrzeuge im Wartungsgang besteht eine Verletzungsgefahr für eventuell im Wartungsgang befindliches Wartungspersonal. Die Stillsetzung der Regalfahrzeuge kann beispielsweise durch das Einnehmen der Fluchtstellung durch die Absturzsicherung ausgelöst werden, insbesondere, wenn diese von außerhalb des Wartungsgangs verursacht wird um einen Zugang für die Wartung herzustellen. Es ist denkbar, dass im Notfall das gesamte Hochregallager stillgesetzt wird.

Weitere Vorteile der Erfindung sind in den nachfolgenden Ausführungsbeispielen beschrieben. Es zeigt:
- **Figur 1**: eine Frontansicht eines Hochregallagers nach dem Stand der Technik,
- **Figur 2**: eine geschnittene Seitenansicht eines erfindungsgemäßen Hochregallagers,
- **Figur 3**: eine Draufsicht auf eine Lagerebene eines erfindungsgemäßen Hochregallagers, und
- **Figur 4**: eine geschnittene Seitenansicht einer weiteren Ausführungsform eines erfindungsgemäßen Hochregallagers.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

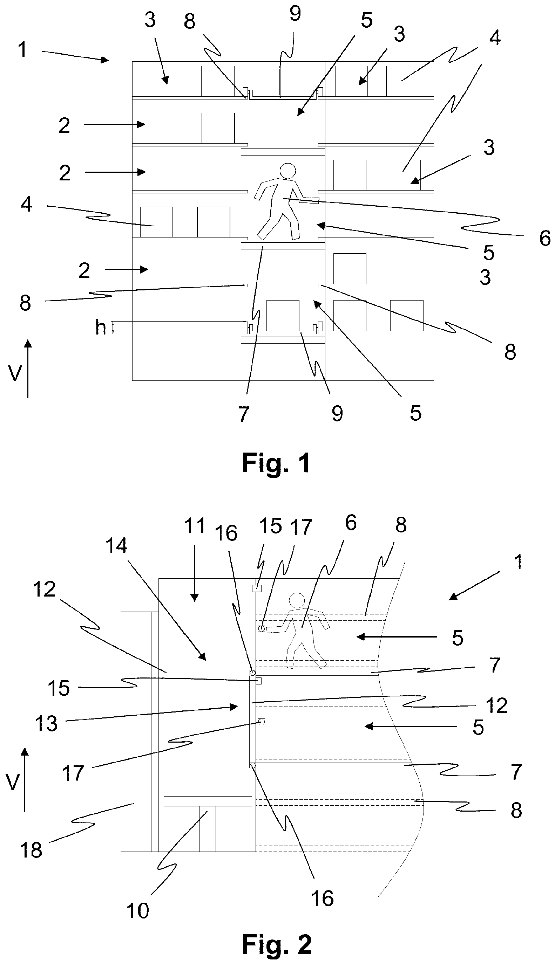

Figur 1 zeigt zunächst ein Hochregallager 1 nach dem Stand der Technik. Auf mehreren Lagerebenen 2, die senkrecht zu einer Vertikalrichtung V angeordnet sind, befindet sich eine Vielzahl von Lagerplätzen 3 für das Lagern von Stückgut 4. Das Stückgut 4 kann sich in einheitlichen Lagerbehältern befinden. Mittig zwischen den Lagerplätzen 3 befinden sich Wartungsgänge 5, in denen sich in einem Wartungsfall Wartungspersonal 6 auf Zwischenböden 7 bewegen kann.

Die Wartungsgänge 5 weisen Führungen 8 auf, entlang derer Regalfahrzeuge 9 bewegbar sind. Vor allem beim Ausfall eines der Regalfahrzeuge 9 ist ein Aufenthalt des Wartungspersonals 6 in einem der Wartungsgänge 5 notwendig. Während eines Normalbetriebs arbeitet das Hochregallager 1 größtenteils autonom. Die Regallagerfahrzeuge 9 sind vorzugsweise ausgebildet, das Stückgut 4 und eventuell vorhandene Lagerbehälter selbstständig im Hochregallager 1 zu transportieren und auf den Lagerplätzen 3 ein- und auszulagern. Insbesondere können die gegebenenfalls mit Stückgut 4 beladenen Regalfahrzeuge 9 die Lagerebenen 2 mithilfe eines Hebers 10 (Figur 2) wechseln. Es ist aber ebenfalls denkbar, dass nur das Stückgut 4 von dem Heber 10 transportiert wird. Die Regalfahrzeuge 9 weisen jeweils eine Höhe h auf.

In Figur 2 ist ein erfindungsgemäßes Hochregallager 1 dargestellt. Der Ausschnitt zeigt insbesondere die Umgebung eines Hubwegs 11, entlang dessen der Heber 10 bewegbar ist. Der Hubweg 11 kann sich beispielsweise in einem Schacht befinden. Die Wartungsgänge 5 schließen sich an den Hubweg 11 an, wobei sich für das Wartungspersonal 6 im Wartungsgang 5 eine Absturzgefahr in den Hubweg 11 ergibt. Zur Sicherung des Wartungspersonals 6 ist jedem Wartungsgang 5 eine Absturzsicherung 12 zugeordnet. Die Absturzsicherungen 12 sind zwischen einer Normalstellung 13 und einer Fluchtstellung 14 bewegbar.

In diesem Ausführungsbeispiel sind exemplarisch zwei Wartungsgänge 5 mit jeweils einer Absturzsicherung 12 dargestellt. Die untere von beiden Absturzsicherungen 12 befindet sich in der Normalstellung 13 und versperrt in dieser den Weg zwischen dem Wartungsgang 5 und dem Hubweg 11. Auf diese Weise ist das Wartungspersonal 6 während eines Normalbetriebs vor einem Absturz in den Hubweg 11 geschützt. Die Absturzsicherung 12 ist beispielsweise durch eine Verriegelungsvorrichtung 15 während des Normalbetriebs in der Normalstellung 13 arretiert.

In einem Notfall wird durch die Absturzsicherung 12 in der Fluchtstellung 14 ein kurzer Fluchtweg für das gefährdete Wartungspersonal 6 geschaffen. Im vorliegenden Ausführungsbeispiel befindet sich die obere von beiden Absturzsicherungen 12 in der Fluchtstellung 14. In der Fluchtstellung 14 gibt die Absturzsicherung 12 den Weg zwischen dem Wartungsgang 5 und dem Hubweg 11 für das Wartungspersonal 6 frei. Darüber hinaus erstreckt sich die Absturzsicherung 12 in der Fluchtstellung 14 in den Hubweg 11 und bildet dadurch einen Fallschutz für das Wartungspersonal 6. Ebenfalls kann das Wartungspersonal 6 die Absturzsicherung 12 in der Fluchtstellung 14 beispielsweise zum Überbrücken des Hubwegs 11 nutzen. Im vorliegenden Beispiel versperrt die Absturzsicherung 12 in der Fluchtstellung 14 den Hubweg 11 vollständig.

Der Stellungswechsel der Absturzsicherung 12 von der Normalstellung 13 in die Fluchtstellung 14 wird beispielsweise von einem Klappmechanismus 16 ermöglicht, der insbesondere ein Scharnier umfassen kann.

Die Einnahme der Fluchtstellung 14 der Absturzsicherung 12 kann beispielsweise durch einen Betätigungsmechanismus 17 ausgelöst werden, wobei der Betätigungsmechanismus 17 beispielsweise als Schalter ausgebildet ist. Im Notfall kann der Betätigungsmechanismus 17 vom Wartungspersonal 6 im Wartungsgang 5 ausgelöst werden, womit sich der Fluchtweg über den Hubweg 11 eröffnet. Der Betätigungsmechanismus 17 kann insbesondere die Verriegelungsvorrichtung 15 lösen. Es ist denkbar, dass die Absturzsicherung 12 ausschließlich von der Verriegelungsvorrichtung 15 in der Normalstellung 13 gehalten wird und die Absturzsicherung 12 bei einem Lösen der Verriegelungsvorrichtung 15 selbstständig die Fluchtstellung 14 einnimmt. Der Betätigungsmechanismus 17 kann beispielswiese über einen Stromkreis mit der Absturzsicherung 12 und/oder der Verriegelungsvorrichtung 15 in Wirkverbindung stehen. Es ist ebenfalls denkbar, dass eine rein mechanische Wirkverbindung zwischen dem Betätigungsmechanismus 17 und der Absturzsicherung 12 und/oder der Verriegelungsvorrichtung 16 besteht. Betätigungsmechanismus 17 und Verriegelungsvorrichtung 15 können auch Bestandteile eines einzelnen Bauteils sein, beispielsweise in Form eines Riegels mit einem Hebel.

Vorzugsweise wird der Heber 10, falls eine der Absturzsicherungen 12 die Fluchtstellung 14 einnimmt, stillgesetzt. Die Stillsetzung kann beispielsweise ebenfalls beim Auslösen eines der Betätigungsmechanismen 17 erfolgen. Am Hubweg 11 ist vorzugsweise eine Leiter 18 für die weitere Flucht des Wartungspersonals 6 angeordnet. Die Leiter 18 kann einen Rücken- bzw. Fallschutz aufweisen, wobei die Leiter 18 insbesondere auf Höhe jedes Wartungsgangs 5 einen Einstieg aufweist.

Neben einer eventuellen Flucht des Wartungspersonals 6 kann die Absturzsicherung 12 in der Fluchtstellung 14 ebenfalls einen Zugang zum entsprechenden Wartungsgang 5 beispielsweise für Ersthelfer, Feuerwehrleute oder Wartungspersonal 6, insbesondere ebenfalls während des Normalbetriebs, ermöglichen.

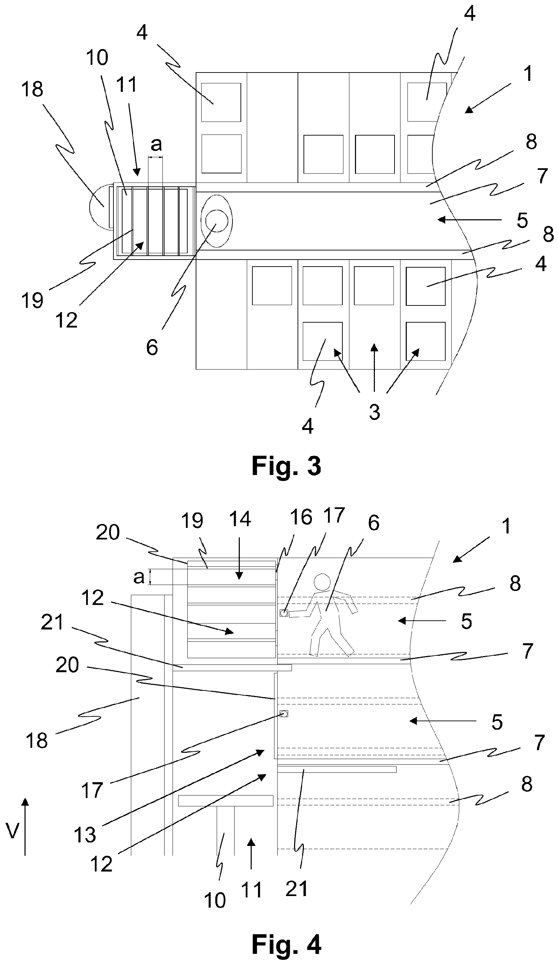

Figur 3 zeigt eine Draufsicht auf das soeben beschriebene Hochregallager 1. Die dargestellte Absturzsicherung 12 befindet sich in der Fluchtstellung 14. Die Absturzsicherung 12 weist Querstreben 19 auf, wobei die Querstreben 19 in der Normalstellung 13 ein Abstürzen des Wartungspersonals 6 verhindern.

Die Querstreben 19 sind in einem Abstand a angeordnet, der vorzugsweise wenigstens der Höhe h der Regalfahrzeuge 9 entspricht. Hierdurch ist es für die Regalfahrzeuge 9 möglich, die Absturzsicherung 12 in der Normalstellung 13 zu passieren. Damit wird der Betrieb des Hochregallagers 1 durch die Absturzsicherung 12 in der Normalstellung 13 nicht beeinträchtigt. Dennoch bildet die Absturzsicherung 12 in der Fluchtstellung 14 einen Fallschutz für das Wartungspersonal 6 und kann gegebenenfalls zur Überbrückung des Hubwegs 11 genutzt werden.

Figur 4 zeigt eine Seitenansicht einer weiteren Ausführungsform des erfindungsgemäßen Hochregallagers 1. In dieser Ausführungsform ist die Absturzsicherung 12 zweiteilig ausgeführt, wobei die Absturzsicherung 12 eine Fluchttür 20 und eine bewegliche Trittfläche 21 umfasst. In der Normalstellung 13 ist die Fluchttür 20 geschlossen, und versperrt damit den Weg zwischen dem Wartungsgang 5 und dem Hubweg 11. Die Fluchttür 20 kann mithilfe eines Klappmechanismus 16 bewegt werden, wobei der Klappmechanismus 16 in diesem Beispiel als Türband ausgebildet ist.

Die bewegliche Trittfläche 21 befindet sich in der Normalstellung 13 beispielsweise unterhalb des Zwischenbodens 7 und beeinträchtigt den Betrieb des Hochregallagers 1 hierdurch nicht. In der Fluchtstellung 14 erstreckt sich die bewegliche Trittfläche 21 in den Hubweg 11. Vorzugsweise versperrt die bewegliche Trittfläche 21 den Hubweg 11 in der Fluchtstellung 14 vollständig, wobei das Wartungspersonal 6 bei der Flucht den Hubweg 11 gefahrlos überqueren kann. Die bewegliche Trittfläche 21 kann beispielsweise mithilfe von Teleskopschienen von der Normalstellung 13 in die Fluchtstellung 14 gebracht werden.

In diesem Ausführungsbeispiel weist die Fluchttür 20 Querstreben 19 auf, wobei diese wie zuvor vorzugsweise in einem Abstand a angeordnet sind, der wenigstens der Höhe h der Regalfahrzeuge 9 entspricht. Die Fluchttür 20 und die bewegliche Trittfläche 21 können insbesondere elektrisch und/oder mechanisch gekoppelt sein, wobei ein Stellungswechsel der Fluchttür 20 ebenfalls einen Stellungswechsel der beweglichen Trittfläche 21 und umgekehrt bewirkt. Es ist denkbar, dass sich in der Fluchtstellung 14 sowohl die bewegliche Trittfläche 21 als auch die Fluchttür 20 in den Hubweg 11 erstrecken.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Hochregallager
- 2: Lagerebene
- 3: Lagerplatz
- 4: Stückgut
- 5: Wartungsgang
- 6: Wartungspersonal
- 7: Zwischenboden
- 8: Führung
- 9: Regalfahrzeug
- 10: Heber
- 11: Hubweg
- 12: Absturzsicherung
- 13: Normalstellung
- 14: Fluchtstellung
- 15: Verriegelungsvorrichtung
- 16: Klappmechanismus
- 17: Betätigungsmechanismus
- 18: Leiter
- 19: Querstreben
- 20: Fluchttür
- 21: bewegliche Trittfläche

- h: Höhe
- a: Abstand
- V: Vertikalrichtung

## Patentansprüche

1. Hochregallager (1) zum Lagern von Stückgut (4),
- wobei das Hochregallager (1) mehrere übereinander angeordnete Lagerebenen (2) mit jeweils einer Vielzahl von Lagerplätzen (3) für das Stückgut (4) umfasst,
- wobei das Hochregallager (1) mehrere übereinander angeordnete Wartungsgänge (5) für ein Wartungspersonal (6) aufweist, über die die Lagerebenen (2) zugänglich sind,
- wobei die Wartungsgänge (5) Führungen (8) aufweisen, entlang derer Regalfahrzeuge (9) bewegbar sind, mit deren Hilfe das Stückgut (4) den einzelnen Lagerplätzen (3) zustellbar ist,
- wobei das Hochregallager (1) wenigstens einen mehrere Lagerebenen (2) in Vertikalrichtung (V) verbindenden Heber (10) umfasst, mit dessen Hilfe die Regalfahrzeuge (9) und/oder das Stückgut (4) zwischen einzelnen Lagerebenen (2) bewegbar sind, und
- wobei der Heber (10) entlang eines Hubweges (11) bewegbar ist, der die einzelnen Wartungsgänge (5) in Vertikalrichtung (V) miteinander verbindet,
**dadurch gekennzeichnet,**
**dass** jedem Wartungsgang (5) zumindest eine Absturzsicherung (12) zugeordnet ist, die zwischen einer Normalstellung (13) und einer Fluchtstellung (14) bewegbar ist, wobei die Absturzsicherung (12) in der Normalstellung (13) den Weg zwischen dem entsprechenden Wartungsgang (5) und dem Hubweg (11) für das Wartungspersonal (6) versperrt, wobei die Absturzsicherung (12) in der Fluchtstellung (14) den Weg zwischen dem genannten Wartungsgang (5) und dem Hubweg (11) für das Wartungspersonal (6) freigibt und wobei sich die Absturzsicherung (12) in der Fluchtstellung (14) darüber hinaus in den Hubweg (11) erstreckt und dadurch einen Fallschutz für das Wartungspersonal (6) bildet.

2. Hochregallager (1) gemäß dem vorangegangenen Anspruch, **dadurch gekennzeichnet, dass** die Absturzsicherung (12) einen Klappmechanismus (16) aufweist.

3. Hochregallager (1) gemäß einem der vorangegangenen Ansprüche, **dadurch gekennzeichnet, dass** die Absturzsicherung (12) eine Verriegelungsvorrichtung (15) aufweist.

4. Hochregallager (1) gemäß einem der vorangegangenen Ansprüche, **dadurch gekennzeichnet, dass** die Absturzsicherung (12) Querstreben (19) aufweist, wobei ein vertikaler Abstand (a) zwischen den Querstreben (19) wenigstens einer Höhe (h) der Regalfahrzeuge (9) entspricht.

5. Hochregallager (1) gemäß einem der vorangegangenen Ansprüche, **dadurch gekennzeichnet, dass** im Wartungsgang (5), insbesondere im Bereich des Hubweges (11) ein Betätigungsmechanismus (17) angeordnet ist, der ausgebildet ist, die Verriegelungsvorrichtung (15) zu betätigen und/oder eine Bewegung der Absturzsicherung (12) von der Normalstellung (13) in die Fluchtstellung (14) einzuleiten.

6. Hochregallager (1) gemäß einem der vorangegangenen Ansprüche, **dadurch gekennzeichnet, dass** am Hubweg (11) eine Leiter (18) angeordnet ist.

7. Hochregallager (1) gemäß einem der vorangegangenen Ansprüche, **dadurch gekennzeichnet, dass** die Absturzsicherung (12) eine Fluchttür (20) und eine bewegliche Trittfläche (21) umfasst, wobei sich die bewegliche Trittfläche (21) in der Fluchtstellung (14) in den Hubweg (11) erstreckt.

8. Verfahren zum Betreiben eines Hochregallagers (1) mit wenigstens einem Wartungsgang (5) und wenigstens einem Heber (10), wobei der Heber (10) entlang eines Hubweges (11) in Vertikalrichtung (V) bewegbar ist, wobei während eines Normalbetriebs ein Weg zwischen dem Wartungsgang (5) und dem Hubweg (11) für ein Wartungspersonal (6) durch eine Absturzsicherung (12) in einer Normalstellung (13) versperrt wird,
**dadurch gekennzeichnet, dass** die Absturzsicherung (12) in einem Notfall von der Normalstellung (13) in eine Fluchtstellung (14) gebracht wird, wobei hierbei der Weg zwischen dem Wartungsgang (5) und dem Hubweg (11) für das Wartungspersonal (6) freigegeben wird und der Hubweg (11) von der Absturzsicherung (12) zumindest teilweise versperrt wird, so dass ein Fallschutz für das Wartungspersonal (6) gebildet wird.

9. Verfahren gemäß dem vorangegangenen Anspruch, **dadurch gekennzeichnet, dass** die Absturzsicherung (12) im Notfall automatisch in die Fluchtstellung (14) gebracht wird.

10. Verfahren gemäß einem der vorangegangenen Ansprüche, **dadurch gekennzeichnet, dass** beim Einnehmen der Fluchtstellung (14) der Absturzsicherung (12) ein Alarm ausgelöst wird.

11. Verfahren gemäß einem der vorangegangenen Ansprüche, **dadurch gekennzeichnet, dass** der Heber (10) durch das Einnehmen der Fluchtstellung (14) der Absturzsicherung (12) stillgesetzt wird.

12. Verfahren gemäß einem der vorangegangenen Ansprüche, **dadurch gekennzeichnet, dass** auch in einem Wartungsfall die Absturzsicherung (12) in die Fluchtstellung (14) gebracht wird, um dem Wartungspersonal (6) Zugang zu dem Wartungsgang (5) zu verschaffen.

13. Verfahren gemäß einem der vorangegangenen Ansprüche, **dadurch gekennzeichnet, dass** im Wartungs- und/oder Notfall alle Regalfahrzeuge (9) im Wartungsgang (5) stillgesetzt werden.
